# EUROPÄISCHE PATENTSCHRIFT

(11) **EP 2 767 806 B1**
(45) Veröffentlichungstag und Bekanntmachung des Hinweises auf die Patenterteilung: **14.10.2015**
(21) Anmeldenummer: 13193622.1
(22) Anmeldetag: 20.11.2013
(51) Int. Cl.: G01D 11/10, F16F 7/10

(54) **Winkelmesseinrichtung**
Angle measuring equipment
Dispositif de mesure d'angle

(30) Priorität: 18.02.2013 DE 102013202560
(43) Veröffentlichungstag der Anmeldung: 20.08.2014
(73) Patentinhaber: Dr. Johannes Heidenhain GmbH, 83301 Traunreut (DE)
(72) Erfinder: Meyer, Hermann, 83458 Schneizlreuth (DE)

(56) Entgegenhaltungen:
- EP-A2- 1 124 058
- WO-A1-2005/119085
- DE-A1-102008 060 839
- DE-A1-102009 027 536
- US-A1- 2004 085 063

## Beschreibung

Die Erfindung betrifft eine Winkelmesseinrichtung gemäß dem Patentanspruch 1.

Winkelmesseinrichtungen, häufig auch Drehgeber genannt, dienen zur Messung von Drehbewegungen eines drehbar gelagerten Körpers, insbesondere einer Welle, über eine oder mehrere Umdrehungen. Die Drehbewegung wird dabei inkremental oder absolut erfasst. In Verbindung mit Zahnstangen und Zahnrädern oder mit Gewindespindeln lassen sich mit einer Winkelmesseinrichtung auch lineare Bewegungen messen.

Häufig werden derartige Winkelmesseinrichtungen in Verbindung mit Elektromotoren verwendet. Um Fluchtungsfehler oder axialen Versatz zwischen der gelagerten Welle der Winkelmesseinrichtung und des betreffenden Elektromotors zu kompensieren, werden häufig Ausgleichskupplungen verwendet. Diese können entweder zwischen der Welle der Winkelmesseinrichtung und der Elektromotorwelle angeordnet sein oder als so genannte Statorkupplungen ausgebildet sein. Statorkupplungen verbinden den Stator der Winkelmesseinrichtungen elastisch mit dem Stator des Elektromotors. Um die Drehbewegungen exakt erfassen zu können, ist es wichtig, dass entsprechende Ausgleichskupplungen in Umfangsrichtung drehsteif ausgebildet sind, also eine hohe Steifigkeit bei Torsionsbelastungen aufweisen. Im Allgemeinen weisen diesbezüglich Statorkupplungen bessere Eigenschaften auf als Rotorkupplungen.

Bei vielen Anwendungen kann es jedoch vorkommen, dass Schwingungen in die Winkelmesseinrichtung eingeleitet werden. Derartige Schwingungen können beispielsweise für die Regelbarkeit eines Antriebs beziehungsweise Motors im betreffenden System nachteilig sein. Besonders problematisch kann diese Situation werden, wenn Resonanzen auftreten. Letztlich kann durch die eingeleiteten Schwingungen die Messgenauigkeit reduziert werden, so dass beispielsweise bei Werkzeugmaschinen, die mit Winkelmesseinrichtungen arbeiten, schwingungsbedingt mangelhafte Oberflächenqualitäten der bearbeitenden Flächen festzustellen sind. Bei Anwendungen in Druckmaschinen können minderwertige Drucke aus der reduzierten Messgenauigkeit der Winkelmesseinrichtung bei bestimmten Schwingungsanregungen resultieren. Zudem kann eine Regelungselektronik überhöhte Motorströme ausgeben bedingt durch eine Fehlinterpretation der auftretenden Drehschwingung als Motorbewegung. Dies führt wiederum beispielsweise zu Pfeifgeräuschen und zu einer übermäßigen Motorerwärmung und in der Folge zu einer Reduzierung des Motorwirkungsgrades.

Aus der DE 10 2008 060 839 ist eine Winkelmesseinrichtung mit einem Schwingungstilger bekannt, der axial drehsteif montiert ist.

Der Erfindung liegt die Aufgabe zugrunde eine Winkelmesseinrichtung der eingangs genannten Art zu schaffen, die ein verbessertes Messverhalten, insbesondere eine optimierte Messsignale bei einer schwingungsbehafteten Umgebung liefert.

Diese Aufgabe wird erfindungsgemäß durch die Schaffung einer Winkelmesseinrichtung mit den Merkmalen des Patentanspruchs 1 gelöst.

Demnach umfasst die Winkelmesseinrichtung einen Stator und einen Rotor, wobei der Rotor relativ zum Stator um eine Achse in Umfangsrichtung drehbar angeordnet ist. Dieser Rotor weist eine Welle auf, an der eine Codescheibe drehfest befestigt ist. Der Stator weist einen Körper und eine Abtasteinrichtung zur Abtastung der Codescheibe auf. Die Winkelmesseinrichtung weist zur Schwingungsdämpfung eine mit dem Körper verbundene Pendelmasse auf, welche mit einer Richtungskomponente parallel zur Umfangsrichtung relativ zum Körper auslenkbar ist. Die Umfangsrichtung bezieht sich auf eine Richtung, entlang der sich ein Punkt, welcher beabstandet von der Achse angeordnet ist, bei einer Rotation die Achse bewegt.

Die Pendelmasse wirkt insbesondere als Fliehkraftpendel oder Tilgerpendel. Die Pendelmasse ist nur am Stator befestigt, wobei die Verbindung zum Stator so weich ausgelegt ist, dass die Pendelmasse den Bewegungen des Stators mit einer gewissen Verzögerung folgt. Dieses Verhalten wirkt damit dämpfend, wobei die dämpfende Wirkung über einen großen Frequenzbereich gewährleistet ist. Überraschenderweise ist eine signifikante Verbesserung des Messverhaltens auch bei Schwingungsanregung durch die zu messende Welle festzustellen, obwohl die Pendelmasse nicht am Rotor befestigt ist. Es hat sich zudem gezeigt, dass die Winkelmesseinrichtung über einen überaus großen Frequenzbereich der Schwingungsanregung beziehungsweise über einem sehr großen Drehzahlbereich des Rotors ohne Messgenauigkeitsreduzierungen arbeitet.

Die Codescheibe kann so ausgebildet sein, dass die Winkelmesseinrichtung inkrementale und / oder absolute Winkelstellungen ausgibt.

Mit Vorteil ist die Erfindung bei einer Winkelmesseinrichtung anwendbar, wenn deren Stator oder der Rotor eine Ausgleichskupplung aufweist, die zur Herstellung einer radial und axial elastischen aber drehsteifen Verbindung des Stators mit einem Maschinenteil geeignet ist. Ebenso kann die Winkelmesseinrichtung am Stator oder am Rotor eine Ausgleichskupplung aufweisen.

Gemäß einer Weiterbildung der Erfindung sind am Körper mehrere Pendelmassen angeordnet. Insbesondere können am Körper des Stators zwei oder vier Pendelmassen angeordnet sein. In diesem Zusammenhang kann es vorteilhaft sein, wenn die Pendelmassen, insbesondere deren Schwerpunkte, bezüglich der Achse symmetrisch angeordnet sind. Demgemäß kann bei der Verwendung von zwei Pendelmassen ein Winkelversatz von 180° zwischen den Schwerpunkten der Pendelmassen vorgesehen sein und bei vier Pendelmassen ein Winkelversatz von 90° zwischen den Schwerpunkten benachbarter Pendelmassen. Wenn die Winkelmesseinrichtung im Betrieb Schwingungen ausgesetzt ist, können sich die Pendelmassen in Umfangsrichtung so bewegen, dass deren relativer Abstand zueinander in Umfangsrichtung variiert.

In weiterer Ausgestaltung der Erfindung ist die Pendelmasse über ein elastisches Element, insbesondere über einen Steg, eine Feder oder einem Elastomerteil mit dem Körper verbunden. Insbesondere kann der Steg ein Festkörpergelenk aufweisen. Als Festkörpergelenk ist ein Gelenk zu verstehen, das auf dem Prinzip der Elastostatik beruht. Die Funktion eines Gelenks wird durch einen Bereich verminderter Biegesteifigkeit relativ zu zwei angrenzenden Bereichen höherer Biegesteifigkeit erreicht. Die verminderte Biegesteifigkeit kann durch lokale Querschnittsverringerung oder eine Schwachstelle erzeugt werden.

Mit Vorteil weist der Steg zwei Festkörpergelenke auf, wobei eine Verbindungsgerade der zwei Festkörpergelenke bezogen auf die Achse in radialer Richtung orientiert ist. Somit schneidet die Verbindungsgerade die Achse.

In einer bevorzugten Ausführungsvariante ist die Winkelmesseinrichtung so konfiguriert, dass die Pendelmasse mit Hilfe einer bifilaren Verbindung relativ zum Körper auslenkbar ist.

Mit Vorteil ist die Pendelmasse über zwei Stege mit dem Körper der Winkelmesseinrichtung verbunden. Dabei kann jeder der Stege zwei Festkörpergelenke aufweisen, wobei die Verbindungsgeraden der zwei Festkörpergelenke eines jeden Steges bezogen auf die Achse in radialer Richtung orientiert sind. Somit schneiden beide Verbindungsgeraden die Achse. Sofern mehrere Pendelmassen verwendet werden kann die Winkelmesseinrichtung so konfiguriert sein, dass sich die Verbindungsgeraden jedes Paares von Festkörpergelenken eines Steges in radialer Richtung orientiert sind.

Im Übrigen bedeutet die Formulierung, wonach ein oder mehrere Stege mit dem Körper verbunden sind nicht, dass diese Verbindung zwingend unmittelbar ausgeführt sein muss. Vielmehr kann auch ein weiteres Element zusätzlich zum Steg in dieser Verbindung zwischen Körper und Pendelmasse angeordnet sein.

Mit Vorteil kann daher die Pendelmasse über einen Steg und einem Befestigungsflansch (als weiteres Element) mit dem Körper verbunden sein.

Weitere vorteilhafte Ausgestaltungen der Erfindung sind den abhängigen Ansprüchen zu entnehmen.

Weitere Merkmale und Vorteile der Erfindung werden bei der nachfolgenden Beschreibung zweier Ausführungsbeispiele anhand der Figuren deutlich werden.

Es zeigen die:
- Figur 1: eine Schnittdarstellung einer Winkelmesseinrichtung gemäß einem ersten Ausführungsbeispiel,
- Figur 2: eine perspektivische Ansicht eines Tilgerelements,
- Figur 3: eine Ansicht (ohne Ausgleichskupplung) von unten auf die Winkelmesseinrichtung mit dem Tilgerelement gemäß dem ersten Ausführungsbeispiel,
- Figur 4: eine Ansicht von unten auf eine Winkelmesseinrichtung mit einem Tilgerelement gemäß einem zweiten Ausführungsbeispiel,
- Figur 5: eine Schnittdarstellung einer Winkelmesseinrichtung gemäß dem zweiten Ausführungsbeispiel,
- Figur 6: eine Ansicht (ohne Ausgleichskupplung) von unten auf eine Winkelmesseinrichtung mit einem Tilgerelement gemäß einem dritten Ausführungsbeispiel,
- Figur 7: eine Schnittdarstellung einer Winkelmesseinrichtung gemäß dem dritten Ausführungsbeispiel.

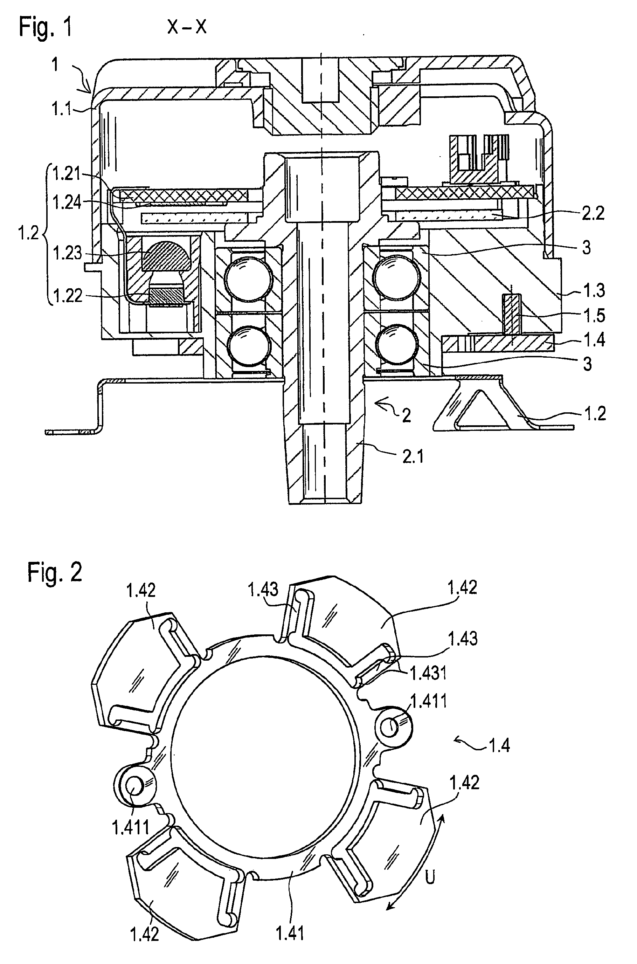

Die in der Figur 1 dargestellte Winkelmesseinrichtung umfasst einen Stator 1 und einen Rotor 2. Der Rotor 2 weist eine Welle 2.1 zum drehfesten Anschluss an ein zu messendes Bauelement, etwa an eine Motorwelle auf. Die Verbindung zwischen der Welle 2.1 der Winkelmesseinrichtung und der Motorwelle wird beispielsweise mit einem durch die Welle 2.1 ragenden Verbindungsmittel in Form einer Befestigungsschraube realisiert, wobei zu diesem Zweck das Ende der Welle 2.1 konisch ausgestaltet ist. Durch die Winkelmesseinrichtung kann also die relative Winkelstellung beziehungsweise Drehbewegung zwischen dem Stator 1 und dem Rotor 2 bestimmt werden. Derartige Winkelmesseinrichtungen werden auch häufig als Drehgeber bezeichnet.

Die Welle 2.1 ist innerhalb eines Körpers 1.3, der dem Stator 1 zuzuordnen ist, durch ein Lager, hier zwei Wälzlager 3, drehbar gelagert. An der Welle 2.1 ist eine im Inneren der Winkelmesseinrichtung angeordnete Codescheibe 2.2 befestigt.

Der Stator 1 umfasst ein Gehäuse 1.1, in dem sich eine so genannte Abtasteinrichtung 1.2 befindet, welche eine Lichtquelle 1.22, einen Kondensor 1.23, ein Sensorelement 1.24 mit einer integrierten Schaltung und eine Abtastplatine 1.21 umfasst. Das Sensorelement 1.24 mit der integrierten Schaltung ist entsprechend auf der Abtastplatine 1.21 elektrisch montiert. Zwischen dem Sensorelement 1.24 mit der integrierten Schaltung, hier ein so genannter Opto-ASIC, und der Codescheibe 2.2 befindet sich ein vergleichsweise geringer Luftspalt. Die als LED ausgestaltete Lichtquelle 1.22 sendet Licht durch den Kondensor 1.23 und danach durch die Codescheibe 2.2. Die Lichtquelle 1.22, der Kondensor 1.23 und das Sensorelement 1.24 mit der integrierten Schaltung sind dabei dem Stator 1 der Winkelmesseinrichtung zugeordnet. Dagegen ist die Codescheibe 2.2, wie bereits erwähnt, an der Welle 2.1 befestigt. Die Codescheibe 2.2, welche also zwischen der Lichtquelle 1.22 und dem Sensorelement 1.24 angeordnet ist, vermag durch ihre Winkelskalierung das eingestrahlte Licht entsprechend der Winkelstellung der Welle 2.1 zu modulieren. Das modulierte Licht trifft schließlich auf Fotodetektoren des Sensorelements 1.24. Durch diese Abtastung entstehen fotoelektrische Signale, welche die Information über die Winkelstellung der Welle 2.1 enthalten. Die fotoelektrisch erzeugten Signale werden durch eine integrierte Schaltung des Sensorelements 1.24 weiterverarbeitet. Die weiterverarbeiteten Positionssignale werden schließlich über ein Kabel an ein weiteres Gerät ausgegeben, z. B. an eine Steuerungseinrichtung einer Maschine.

Der Stator 1 der Winkelmesseinrichtung wird über eine Ausgleichskupplung 1.2 an einem Maschinenteil, z. B. an einem stationären Motorgehäuse befestigt. Die Ausgleichskupplung 1.2 dient dazu, dass Fluchtungsfehler zwischen der Welle 2.1 und der Motorwelle nicht zu unzulässig hohen Belastungen in den Wälzlagern 3 führen.

Ferner weist der Stator 1 ein Tilgerelement 1.4 auf, das gemäß der Figur 2 einen zentralen Ring 1.41 mit zwei Befestigungsösen 1.411 umfasst. Weiterhin weist das Tilgerelement 1.4 vier Pendelmassen 1.42 auf. Die Pendelmassen 1.42 beziehungsweise deren Schwerpunkte sind mit einem Winkelversatz von 90° zueinander angeordnet. Über Stege 1.43 sind die Pendelmassen 1.42 mit dem Ring 1.41 verbunden. Die Stege 1.43 weisen ihrerseits jeweils zwei Festkörpergelenke 1.431 auf. Das Tilgerelement 1.4 ist einstückig ausgeführt und vorzugsweise aus Metall, insbesondere aus Stahl, gefertigt.

Der Körper 1.3 weist Bohrungen auf, in denen Dämpfungselemente 1.5, die beispielsweise aus einem Elastomermaterial hergestellt sind, platziert sind. Dabei sind die Innendurchmesser der Bohrungen etwas größer als die Außendurchmesser der Dämpfungselemente 1.5 im (mechanisch) spannungsfreien Zustand. Folglich ist eine gewisse Beweglichkeit der Dämpfungselemente 1.5 in Umfangsrichtung innerhalb der Bohrungen gegeben. Die Dämpfungselemente 1.5 sind in den Bohrungen des Körpers 1.3 außerdem so angeordnet, dass diese den Boden der jeweiligen Bohrung und zudem eine Pendelmasse 1.42 berühren. Dadurch können Bewegungen der Pendelmassen 1.42 in axialer Richtung, also parallel zur Achse A, weitgehend unterdrückt werden, während Bewegungen in Umfangsrichtung U der Pendelmassen 1.42 ermöglicht sind.

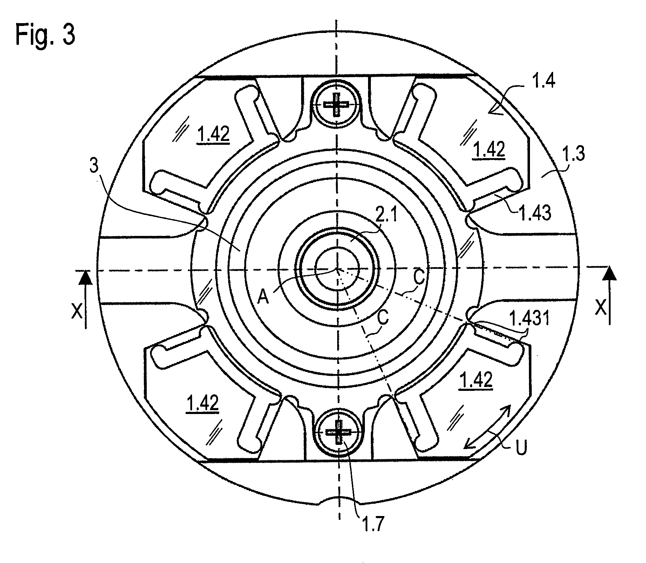

In der Figur 3 ist eine Ansicht der Winkelmesseinrichtung aus Axialrichtung ohne die Ausgleichskupplung 1.2 gezeigt. Unter Verwendung von Schrauben 1.7, die durch die Befestigungsösen 1.411 gesteckt sind ist der Ring 1.41 fest an den Körper 1.3 der Winkelmesseinrichtung montiert. Die Dämpfungselemente 1.5 sind in Kontakt mit jeweils einer der Pendelmassen 1.42 axial leicht vorgespannt.

Bedingt durch Freifräsungen des Körpers 1.3 befindet sich ein kleiner axialer Luftspalt zwischen dem Körper 1.3 und der jeweiligen Pendelmasse 1.42, wie dies auch in der Figur 1 dargestellt ist. Der Ring 1.41 liegt dagegen fest am Körper 1.3 an, so dass Schwingungen vom Körper 1.3 zum Ring 1.41 und in umgekehrter Richtung übertragbar sind. Eine Verbindungsgerade C der Festkörpergelenke 1.431 eines Stegs 1.43 schneidet die Achse A. Dies trifft für beide Stege 1.43 zu, so dass also beide Verbindungsgeraden C, die einer Pendelmasse 1.42 zugehören die Achse A schneiden. Somit liegt der Drehpunkt der betreffenden Pendelmasse 1.42 auf der Achse A, um die der Rotor 2 relativ zum Stator 1 entlang einer Umfangsrichtung U drehbar angeordnet ist. Nachdem eine Pendelmasse 1.42 jeweils mit zwei Stegen 1.43 am Ring befestigt ist, kann man hier auch von einer bifilaren Aufhängung sprechen, so dass die Pendelmasse 1.42 praktisch nur noch in einer Ebene, die senkrecht zur Achse A orientiert ist, schwingen kann. Das Tilgerelement 1.4 ist so ausgeführt, dass für alle Pendelmassen 1.42 die zugehörigen Verbindungsgeraden C die Achse A schneiden. Im Übrigen sind alle Pendelmassen 1.42 bezüglich der Achse A symmetrisch angeordnet. Insbesondere liegen die Pendelmassen 1.42 in ein und derselben Ebene, bzw. deren Schwerpunkte.

Insbesondere bei einer Winkelmesseinrichtung, die eine vergleichsweise elastische Ausgleichskupplung 1.2 aufweist, können durch Schwingungen, insbesondere Drehschwingungen, Messungenauigkeiten entstehen. Insbesondere können Messsignale ausgegeben werden, die eine Wellendrehung "vortäuschen", obwohl nur schwingungsbedingte Relativbewegungen zwischen Stator und Rotor erfolgen.

Im schwingungsbehafteten Betrieb der Winkelmesseinrichtung folgen die Pendelmassen 1.42 den Bewegungen des Körpers 1.3 mit einer gewissen Zeitverzögerung, so dass gegenphasige Bewegungen entstehen können. Dabei werden die Festkörpergelenke 1.431 verformt, was aber weitgehend ohne innere Reibung erfolgt. Die dämpfende Wirkung für die Winkelmesseinrichtung resultiert im Wesentlichen aus dem Effekt, dass durch die Beschleunigungen beziehungsweise Bewegungen der Pendelmassen 1.42 in Umfangsrichtung U die Schwingungsamplituden der Winkelmesseinrichtung insgesamt gegenüber herkömmlichen Winkelmesseinrichtungen signifikant reduziert werden.

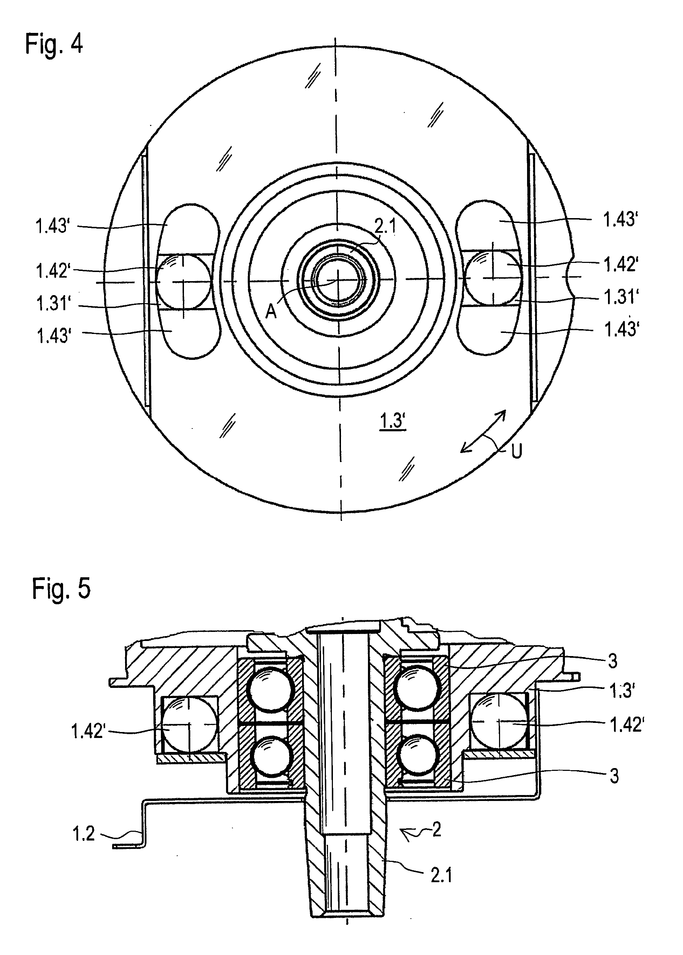

Gemäß einem zweiten Ausführungsbespiel nach den Figuren 4 und 5 können als Pendelmassen 1.42' Kugeln verwendet werden. Diese Kugeln sind mit dem Körper 1.3' über elastische Elemente 1.43' mechanisch verbunden. Weiterhin weist der Körper 1.3' Nuten 1.31' auf. Jede der Nuten 1.31' ist so ausgestaltet, dass diese die zugehörige Pendelmasse 1.42' beidseitig radial führt, wobei aber die Pendelmasse 1.42' nur in Umfangsrichtung U beweglich ist. Insofern verlaufen die Wände der Nuten 1.31' entlang konzentrischer Kreissegmentlinien, deren jeweiliger Mittelpunkt auf der Achse A liegt. Die Beweglichkeit der Pendelmassen 1.42' in Umfangsrichtung U wird durch die elastischen Elemente 1.43' begrenzt, die beispielsweise als Elastomer- oder Gummiteile oder als Metallfedern ausgestaltet sein können.

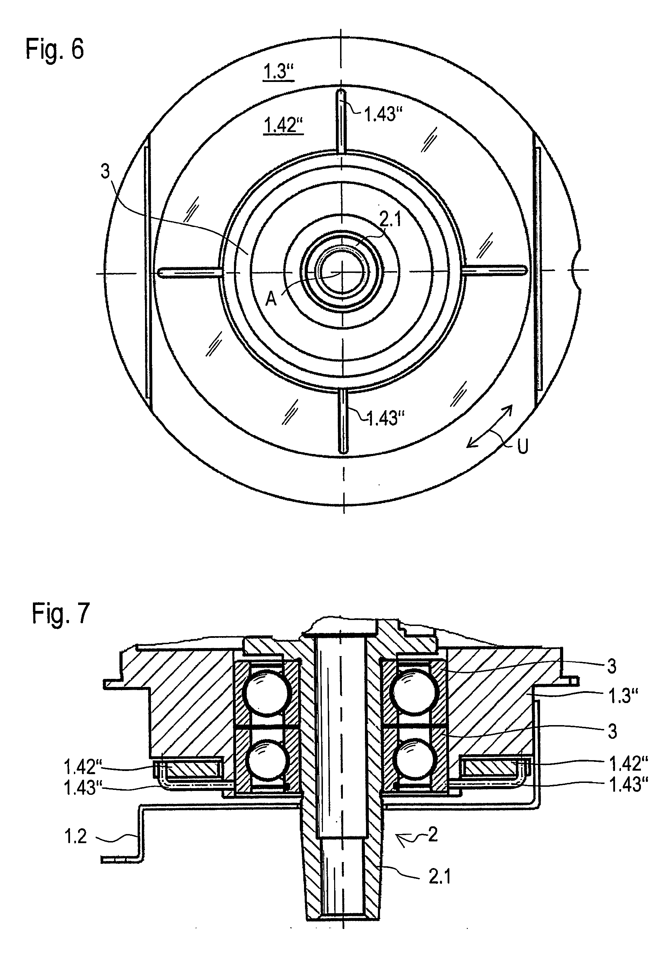

Als drittes Ausführungsbeispiel ist in den Figuren 6 und 7 eine Anordnung gezeigt, bei der eine ringförmige Pendelmasse 1.42" über Stege 1.43" mit dem Körper 1.3" verbunden ist. Auch hier sind die Stege 1.43" radial orientiert. Wenn die Winkelmesseinrichtung gemäß dem dritten Ausführungsbeispiel Schwingungen ausgesetzt ist, wird die ringförmige Pendelmasse 1.42" in leichte Drehschwingungen um einen Mittelpunkt auf der Achse A versetzt, was eine signifikante Reduzierung der Schwingungsamplitude der Winkelmesseinrichtung im Vergleich zu herkömmlichen Winkelmesseinrichtungen mit sich bringt.

## Patentansprüche

1. Winkelmesseinrichtung umfassend einen Stator (1) und einen Rotor (2), wobei der Rotor (2) relativ zum Stator (1) um eine Achse (A) in Umfangsrichtung (U) drehbar angeordnet ist, und
der Rotor (2) eine Welle (2.1) aufweist, an der eine Codescheibe (2.2) drehfest befestigt ist,
der Stator (1) einen Körper (1.3; 1.3'; 1.3") und eine Abtasteinrichtung (1.2) zur Abtastung der Codescheibe (2.2) aufweist,
**dadurch gekennzeichnet, dass** die Winkelmesseinrichtung zur Schwingungsdämpfung eine mit dem Körper (1.3; 1.3'; 1.3") verbundene Pendelmasse (1.42; 1.42'; 1.42") aufweist, welche mit einer Richtungskomponente parallel zur Umfangsrichtung (U) relativ zum Körper (1.3; 1.3'; 1.3") auslenkbar ist.

2. Winkelmesseinrichtung gemäß dem Anspruch 1, in welcher der Stator (1) und / oder der Rotor (2) zur Herstellung einer radial und axial elastischen aber drehsteifen Verbindung des Stators (1) mit einem Maschinenteil eine Ausgleichskupplung (1.2) aufweist.

3. Winkelmesseinrichtung gemäß dem Anspruch 1 oder 2, in welcher am Körper (1.3; 1.3') mehrere Pendelmassen (1.42; 1.42') angeordnet sind.

4. Winkelmesseinrichtung gemäß dem Anspruch 3, in welcher die Pendelmassen (1.42; 1.42') bezüglich der Achse (A) symmetrisch angeordnet sind.

5. Winkelmesseinrichtung gemäß einem der vorhergehenden Ansprüche, in welcher die Pendelmasse (1.42; 1.42"; 1.42") über ein elastisches Element (1.43; 1.43"; 1.43") mit dem Körper (1.3; 1.3'; 1.3") verbunden ist.

6. Winkelmesseinrichtung gemäß einem der vorhergehenden Ansprüche, in welcher die Pendelmasse (1.42') über ein Elastomer- oder Gummiteil oder über eine Metallfeder (1.43') mit dem Körper (1.3') verbunden ist.

7. Winkelmesseinrichtung gemäß einem der vorhergehenden Ansprüche, in welcher die Pendelmasse (1.42; 1.42") über einen Steg (1.43; 1.43") mit dem Körper (1.3; 1.3") verbunden ist.

8. Winkelmesseinrichtung gemäß dem Anspruch 7, in welcher der Steg (1.43) ein Festkörpergelenk (1.431) aufweist.

9. Winkelmesseinrichtung gemäß dem Anspruch 7 oder 8, in welcher der Steg (1.43) zwei Festkörpergelenke (1.431) aufweist, wobei eine Verbindungsgerade (C) der zwei Festkörpergelenke (1.431) bezogen auf die Achse (A) in radialer Richtung orientiert ist.

10. Winkelmesseinrichtung gemäß einem der vorhergehenden Ansprüche, in welcher die Pendelmasse (1.42) mit Hilfe einer bifilaren Verbindung relativ zum Körper (1.3) auslenkbar ist.

11. Winkelmesseinrichtung gemäß einem der Ansprüche 7 bis 9, in welcher die Pendelmasse (1.42) über zwei Stege (1.43) mit dem Körper (1.3) verbunden ist.

12. Winkelmesseinrichtung gemäß einem der vorhergehenden Ansprüche, in welcher die Pendelmasse (1.42) über einen Steg (1.43) und einem Befestigungsflansch (1.41) mit dem Körper (1.3) verbunden ist.

## Claims

1. Angle measuring device comprising a stator (1) and a rotor (2), the rotor (2) being arranged such that it can rotate relative to the stator (1) in the circumferential direction (U) about an axis (A), and
the rotor (2) having a shaft (2.1), to which a code disc (2.2) is fixed so as to rotate therewith,
the stator (1) having a body (1.3; 1.3'; 1.3") and a sensing device (1.2) for sensing the code disc (2.2),
**characterized in that**
for the purpose of vibration damping, the angle measuring device has a pendulum mass (1.42; 1.42' ; 1.42") which is connected to the body (1.3; 1.3'; 1.3") and which can be deflected relative to the body (1.3; 1.3'; 1.3") with a directional component parallel to the circumferential direction (U).

2. Angle measuring device according to Claim 1, in which the stator (1) and/or the rotor (2) has a compensating coupling (1.2) for producing a radially and axially elastic but rotationally rigid connection between the stator (1) and a machine part.

3. Angle measuring device according to Claim 1 or 2, in which a plurality of pendulum masses (1.42; 1.42') are arranged on the body (1.3; 1.3').

4. Angle measuring device according to Claim 3, in which the pendulum masses (1.42; 1.42') are arranged symmetrically with respect to the axis (A).

5. Angle measuring device according to one of the preceding claims, in which the pendulum mass (1.42; 1.42'; 1.42'') is connected to the body (1.3; 1.3'; 1.3") via an elastic element (1.43; 1.43'; 1.43").

6. Angle measuring device according to one of the preceding claims, in which the pendulum mass (1.42') is connected to the body (1.3') via an elastomer or rubber part or via a metal spring (1.43').

7. Angle measuring device according to one of the preceding claims, in which the pendulum mass (1.42; 1.42") is connected to the body (1.3; 1.3") via a web (1.43; 1.43").

8. Angle measuring device according to Claim 7, in which the web (1.43) has a solid body joint (1.431).

9. Angle measuring device according to Claim 7 or 8, in which the web (1.43) has two solid body joints (1.431), a connecting straight line (C) of the two solid body joints (1.431) being oriented in the radial direction with respect to the axis (A).

10. Angle measuring device according to one of the preceding claims, in which the pendulum mass (1.42) can be deflected relative to the body (1.3) with the aid of a bifilar connection.

11. Angle measuring device according to one of Claims 7 to 9, in which the pendulum mass (1.42) is connected to the body (1.3) via two webs (1.43).

12. Angle measuring device according to one of the preceding claims, in which the pendulum mass (1.42) is connected to the body (1.3) via a web (1.43) and a fixing flange (1.41).

## Revendications

1. Dispositif de mesure d'angle comprenant un stator (1) et un rotor (2),
le rotor (2) étant disposé de manière à pouvoir tourner par rapport au stator (1) dans une direction périphérique (U) autour d'un axe (A) et
le rotor (2) présentant un arbre (2.1) sur lequel un disque de codage (2.2) est fixé à rotation solidaire,
le stator (1) présentent un corps (1.3; 1.3'; 1.3') et un dispositif de palpage (1.2) qui palpe le disque de codage (2.2), **caractérisé en ce que**
le dispositif de mesure d'angle présente pour l'amortissement des vibrations une masse pendulaire (1.42; 1.92'; 1.42") reliée au corps (1.3; 1.3'; 1.3") et apte à être déviée par rapport au corps (1.3; 1.3'; 1.3") avec une composante de direction parallèle à la direction périphérique (U).

2. Dispositif de mesure d'angle selon la revendication 1, dans lequel le stator (1) et/ou le rotor (2) présentent un accouplement d'équilibrage (1.2) pour établir une liaison élastique dans le sens radial et dans le sens axial mais rigide en rotation du stator (1) avec une pièce de machine.

3. Dispositif de mesure d'angle selon les revendications 1 ou 2, dans lequel plusieurs masses pendulaires (1.42; 1.42') sont disposées sur le corps (1.3; 1.3').

4. Dispositif de mesure d'angle selon la revendication 3, dans lequel les masses pendulaires (1.42; 1.42') sont disposées symétriquement par rapport à l'axe (A).

5. Dispositif de mesure d'angle selon l'une des revendications précédentes, dans lequel la masse pendulaire (1.42; 1.42''; 1.42") est reliée au corps (1.3; 1.3'; 1.3") par l'intermédiaire d'un élément élastique (1.43; 1.43"; 1.43").

6. Dispositif de mesure d'angle selon l'une des revendications précédentes, dans lequel la masse pendulaire (1.42') est reliée au corps (1.3') par une pièce en élastomère ou en caoutchouc ou par l'intermédiaire d'un ressort métallique (1.43').

7. Dispositif de mesure d'angle selon l'une des revendications précédentes, dans lequel la masse pendulaire (1.42; 1.92") est reliée au corps (1.3; 1.3") par l'intermédiaire d'une traverse (1.43; 1.43").

8. Dispositif de mesure d'angle selon la revendication 7, dans lequel la traverse (1.43) présente une articulation (1.431) de corps fixe.

9. Dispositif de mesure d'angle selon les revendications 7 ou 8, dans lequel la traverse (1.43) présente deux articulations (1.431) de corps fixe, une droite (C) reliant les deux articulations (1.431) de corps fixe étant orientée dans la direction radiale par rapport à l'axe (A).

10. Dispositif de mesure d'angle selon l'une des revendications précédentes, dans lequel la masse pendulaire (1.42) peut être déviée par rapport au corps (1.3) au moyen d'une liaison à deux fils.

11. Dispositif de mesure d'angle selon l'une des revendications 7 à 9, dans lequel la masse pendulaire (1.42) est raccordée au corps (1.3) par deux traverses (1.43).

12. Dispositif de mesure d'angle selon l'une des revendications précédentes, dans lequel la masse pendulaire (1.42) est reliée au corps (1.3) par l'intermédiaire d'une traverse (1.43) et d'une bride de fixation (1.41).
